# EUROPEAN PATENT APPLICATION

(11) **EP 1 022 239 A1**
(43) Date of publication of application: **26.07.2000**
(21) Application number: 99101271.7
(22) Date of filing: 23.01.1999
(51) Int. Cl.: B65G 1/137

(54) **Loading system for drawers**

(71) Applicant: GATE GOURMET INTERNATIONAL AG, 8058 Zürich Airport (CH)
(72) Inventor: Host-Madsen, Knud, 2900 Hellerup (DK); Schnellmann, Klaus, 8166 Niederweningen (CH)
(74) Representative: Troesch Scheidegger Werner AG

(57) **Abstract**

The loading system for drawers, also called drawer packing system, comprises a number of components each serving to at least temporarily store items to be packed, to support drawers during packing and to store packed drawers. All such components are equipped with wheels, rollers or the like, enabling their easy displacement to any desired location and position.

## Description

The present invention relates to a loading system for drawers to be used in trolleys, such as airline trolleys, comprising a number of components, such as devices for being supplied with and for storing items to be loaded into the drawers, tables for individual drawer packing as well as carriers for drawers.

Such systems are used for example in so-called flight kitchens, where drawers have to be filled with numerous different items to be finally placed in airline trolleys. When packing drawers some of them have to be loaded with only a few but heavy big items (up to 1 kg, e.g. bottles), while on the other hand very small items in a great number have to be packed in other drawers. Each airline company has its own specific prescribed layout for the drawer packing, asking for great flexibility at the loading stations and the supply areas. In actually known systems items have to be transported from stationary supplies to dispensers on tables where drawers are to be packed. The drawers have to be placed at the correct place. It is, however, unavoidable to displace special transport means for the items to be placed in the dispensers, necessitating often to travel back and forth between supply areas and dispensers. The whole system is relatively rigid, needs space and is time consuming.

It is an object of the present invention to provide a new concept of a loading and unloading system avoiding most of the aforementioned drawbacks. The solution in accordance with the present invention is very simple: All components of the system, such as devices for being supplied with and for temporarily storing items to be loaded into drawers, i.e. in principle dispensers, working tables, carriers for the drawers used before placing the drawings in trolleys etc., are directly equipped with wheels or rollers enabling easy displacement of all components to any desired position or location or said components are removably placed on undercarriages equipped with wheels or rollers.

A special embodiment provides for coupling means permitting coupling of a plurality of components for displacement as a unit.

The loading and unloading system in accordance with the present invention will be described in some more detail in the following description.

The most important components of the drawer loading system of the invention are: Small items dispensers, carriers for drawers, tables for drawer packing, pallet handlers, small flow racks.

### a) Small items dispenser:

Bins of different size full of items are arranged in horizontal rows in a bin store of the dispenser. Depending on the operation, the same items can be arranged in more than one bin, side by side or one above the other for a bigger supply, or for another way of operation one can have a supply of items for one flight or one airline in one row of bins. The drawers to be filled are positioned in front of the operator and so he can take items from the bins and put them in the drawer.

If the operator wants to work from another row of bins, he simply lowers or raises the bin store up and down with a hand crank, provided of course that the dispenser is equipped with a lifting mechanism.

The whole system sits on wheels, so the operator can move his dispenser to the main supply area from time to time and restock his dispenser. This way no additional bins have to travel back and forth between supply area and dispenser.

The filled drawers are stored in this carrier and can be moved and stored in parking areas till the next step is ready (normally putting drawers from their storing carrier into trolleys).

### b) Carrier for drawers:

A similar system as used for storing and transporting items in bins is used. The carriers are bigger and stronger for the bigger size and weight. The drawers are loaded on this system manually from the above mentioned small items dispenser or from small flow racks.

The carriers, which could directly by trolleys, can be stored, loaded or unloaded in any suitable parking area along walls or isles or in a so-called trolley shuttle. They can very easily be moved from one work area to another work area.

### c) Table for drawer packing

For quality control reasons it has been found that only drawers pulled out of the trolley completely can be checked and filled to specification. The table allows arranging all the drawers of one trolley on the ideal height for the operator to fill and check the drawers. The table is equipped with wheels. The trolley can e.g. be coupled to the table with a simple looped ketch. So the table equipped with wheels and the trolley can be pushed together to and through the supply alley for filling the drawers. On this system the drawers are moved along the supplies, since the supplies can be heavy and big (bottles and cans).

### d) Pallet handler (optional)

Pallets full of supplies like cans or bottles are positioned along supply alleys. The pallets are equipped with wheels or are placed on an undercarriage with wheels, permitting bringing the pallets to the right layout position and/or for turning the partially emitted pallets, so that the other side of the pallets can be worked off.

### e) Small flow racks

A small flow rack on wheels is used to refill drawers. The flow rack is full with items in bins or boxes. Drawers are sitting on a small shelve in front of the flow rack.

For more different items per drawer more than one flow rack is positioned side by side. The drawers, once filled to specification, are stored in carriers for drawers or in airline trolleys.

The whole system sits on wheels, so the operator can move his flow rack to the main supply area from time to time and restock his flow rack. This way no additional bins have to travel back and forth between supply area and flow rack.

Thus, in accordance with the present invention, all components of the loading (unloading) system sit on wheels (or rollers), providing a quite universal flexibility, needing little space and providing optimal working conditions for the operators (time saving).

## Claims

1. A loading system for drawers to be used in trolleys, such as airline trolleys, comprising a number of components, such as devices for being supplied with and for storing items to be loaded into the drawers, tables for individual drawer packing as well as carriers for drawers, characterised in that all said components are equipped with wheels or rollers enabling easy displacement of said components to any desired location.

2. The system of claim 1, wherein the wheels are mounted directly on said components.

3. The system of claim 1, wherein at least part of said components are removably placed on undercarriages equipped with wheels or rollers.

4. The system of any of claims 1 to 3, wherein means are provided for temporarily coupling one component to another component, permitting movement of a plurality of components as a single unit.
